# EUROPÄISCHE PATENTSCHRIFT

(11) **EP 0 751 851 B1**
(45) Veröffentlichungstag und Bekanntmachung des Hinweises auf die Patenterteilung: **07.07.1999**
(21) Anmeldenummer: 95910495.1
(22) Anmeldetag: 17.02.1995
(51) Int. Cl.: B23Q 11/00

(54) **RUNDLAUFWERKZEUG MIT WUCHTRINGEN**
ROTARY TOOL WITH BALANCING RINGS
OUTIL ROTATIF A BAGUES D'EQUILIBRAGE

(30) Priorität: 29.03.1994 DE 9405559 U
(43) Veröffentlichungstag der Anmeldung: 08.01.1997
(73) Patentinhaber: KENNAMETAL HERTEL AG Werkzeuge + Hartstoffe, 90766 Fürth (DE)
(72) Erfinder: JÄGER, Horst, D-90451 Nürnberg (DE); MÜLLER, Gebhard, D-90766 Fürth (DE)
(74) Vertreter: Tergau, Enno, Dipl.-Ing.
(86) Internationale Anmeldenummer: EP9500576
(87) Internationale Veröffentlichungsnummer: WO9526258

(56) Entgegenhaltungen:
- US-A- 5 263 995

## Beschreibung

Die vorliegende Erfindung betrifft ein Rundlaufwerkzeug, insbesondere Hochgeschwindigkeitsfräser oder -bohrer, gemäß dem Oberbegriff des Hauptanspruches.

Rundlaufwerkzeuge mit Wuchtringen dieser Art sind beispielsweise der US-A-5 263 995 oder der US-A-5 074 723 zu entnehmen. Bei derartigen Rundlaufwerkzeugen mit Werkzeugen und Werkzeughaltern, welche bei sehr hohen Umdrehungszahlen, beispielsweise in der Größenordnung von bis zu 20.000 Umdrehungen pro min, arbeiten, ergibt sich das Problem der Feinauswuchtung der Werkzeuge und Werkzeughalter. Gemaß dem bekannten Stand der Technik, wie er beispielsweise durch die beiden oben genannten US-Patentschriften dargestellt ist, werden zu diesem Zweck bei der Feinauswuchtung zwei Wuchtringe in axialem Abstand voneinander auf dem Werkzeug- bzw. Werkzeughalterumfang angeordnet. Diese Wuchtringe zur Feinauswuchtung sind mit ihrem Innenumfang auf dem Außenumfang des Rundlaufwerkzeuges oder da Rundlauf-Werkzeughalters in Umfangsrichtung verschiebbar und in unterschiedlichen Drehstellungen gegenüber dem Werkzeugkörper bzw. Werkzeughalter-Körper fixierbar. Diese relative Verschiebbarkeit der Wuchtringe gegenüber dem Werkzeug- bzw. Werkzeughalter-Körper erfolgt insbesondere stufenlos.

Die Wuchtringe zur Feinauswuchtung sind über ihren Umfang mit unterschiedlicher Masse ausgestattet. Am einfachsten ist dies dadurch erzielbar, daß die Wuchtringe in gewissen Umfangsbereichen durchbohrt sind. Beispielsweise handelt es sich dabei um Bohrungen, die parallel zur Rotationsachse des Werkzeuges bzw. Werkzeughalters verlaufen, wodurch in dem davon betroffenen Umfangsbereich des jeweiligen Wuchtringes eine Massenreduzierung erzielbar ist.

Der Wuchtausgleich bzw. die Feinauswuchtung wird nun dadurch vorgenommen, daß mindestens einer der Wuchtringe, vorzugsweise aber beide Ringe in eine Drehstellung gegenüber dem Werkzeug bzw. Werkzeughalter gebracht und in dieser fixiert werden, in der der Wuchtausgleich in seiner gewünschten Feinheit vorliegt.

Die konstruktive Ausbildung der Trägerkörper - gleichgültig, ob Werkzeugkörper oder Werkzeughalter-Körper - nach dem Stand der Technik hat indessen den Nachteil, daß die Wuchtringe im Betrieb aufgrund der hohen Drehzahlen erheblichen Fliehkräften unterliegen und damit sowohl im Bereich der Bohrungen der Wuchtringe, als auch im Bereich von zur Festlegung der Wuchtringe vorzusehenden Klemmelementen in ihrem Querschnitt geschwächt sind und dort bersten können. Ein weiterer Nachteil bei den bekannten Ausbildungen besteht darin, daß die in Achsrichtung des Werkzeuges bzw. Werkzeughalters nebeneinander liegenden Wuchtringe eine gewisse Baulänge beanspruchen, die zu einer Vergrößerung der gesamten, in Achsrichtung wirksamen Baulänge des Werkzeugkörpers bzw. des Werkzeughalter-Körpers führen.

Die vorliegende Erfindung zielt nun darauf ab, ein Rundlaufwerkzeug, insbesondere einen Hochgeschwindigkeitsfräser oder -bohrer, der eingangs genannten Art dahingehend weiterzubilden, daß durch eine platzsparende Anordnung der Wuchtringe insgesamt eine kürzere Baulänge des gesamten, vom Werkzeughalter sowie vom Werkzeug selbst gebildeten Systems erzielbar ist. Weiterhin zielt die vorliegende Erfindung darauf ab, die Wuchtringe zumindest teilweise an ihrem Außenumfang abzustützen, so daß die Gefahr einer Zerstörung der Wuchtringe und somit des Werkzeuges durch die im Betrieb des Werkzeuges auftretenden, hohen Fliehkräfte zumindest stark herabgesetzt, wenn nicht vollkommen eliminiert wird.

Zur Lösung dieser Aufgabe ist das erfindungsgemäße Rundlaufwerkzeug gemäß den kennzeichnenden Merkmalen des Hauptanspruches ausgebildet. Dadurch, daß zwei Wuchtringe zueinander konzentrisch und somit in einer gemeinsamen Ebene normal auf die Rotationsachse des Werkzeuges bzw. des Werkzeughalters angeordnet sind, ergibt sich insgesamt eine kurzbauende Ausgestaltung des von dem Werkzeug und dem Werkzeughalter gebildeten Gesamtsystems. Da die Wuchtringe ineinander liegend angeordnet sind, können sich diese zunächst aneinander in radialer Richtung abstützen. Erfindungsgemäß ist schließlich vorgesehen, daß die Wuchtringe selbst in radialer Richtung durch den Werkzeughalterkörper oder den Werkzeugkörper abgestützt sind, so daß die im Betrieb auftretenden, hohen Fliehkräfte, welche auf die Wuchtringe ausgeübt werden, über den jeweiligen Außenumfang der Wuchtringe in das Material des Werkzeughalters oder Werkzeugkörpers eingebracht werden und von diesen aufgenommen werden. Durch diese radiale Abstützung der Wuchtringe ist somit die Gefahr eines Brechens der Wuchtringe in Bereichen mit verringerter Dicke oder in denjenigen Bereichen, in welchen Bohrungen zur Herabsetzung der Masse der Wuchtringe und/oder zur Fixierung derselben längs des Umfangs vorgesehen sind, ausgeschaltet oder zumindest weitestgehend herabgesetzt.

Für eine besonders einfache und sichere Anordnung und Festlegung der Wuchtringe in einer gewünschten Position ist das erfindungsgemäße Rundlaufwerkzeug derart weitergebildet, wie dies in Anspruch 2 unter Schutz gestellt ist. Derartige konzentrische, kreisförmige Nuten können in einfacher Weise in entsprechenden Stirnbereichen oder flanschartigen Abschnitten des Werkzeugkörpers oder des Werkzeughalters mit der entsprechenden Paßgenauigkeit für die Aufnahme wenigstens eines Wuchtringes ausgebildet werden. Bei Ausbildung von zur Rotationsachse des Werkzeuges konzentrischen, kreisförmigen Nuten zur Aufnahme der Wuchtringe ergibt sich eine Abstützung der Wuchtringe über ihren gesamten Außenumfang und somit eine entsprechend gleichmäßige Aufnahme der Fliehkräfte im Material des Werkzeughalters oder Werkzeugkörpers. Wenn der Bereich der Stirnfläche bzw. der flanschartige Bereich zur Aufnahme der Wuchtringe ausreichend groß bemessen ist, kann für jede der wenigstens zwei zu verwendenden Wuchtringe eine entsprechende kreisförmige Nut vorgesehen sein, innerhalb welcher jeweils ein Wuchtring angeordnet wird. Im Fall von beengten Platzverhältnissen und für eine einfache Festlegung der gewünschten Position der Wuchtringe kann jedoch erfindungsgemäß mit einer einzigen kreisförmigen Nut zur Aufnahme beider Wuchtringe das Auslangen gefunden werden. Gemäß einer besonders bevorzugten Ausführungsform ist die kreisförmige Nut zur Aufnahme der Wuchtringe so bemessen, wie dies in Anspruch 3 gekennzeichnet ist.

Wie oben bereits angedeutet, muß für eine ordnungsgemäße Festlegung der Wuchtringe relativ zum Werkzeughalter oder zum Werkzeugkörper Sorge getragen werden, wobei bei Vorsehen von einer der Wuchtringe entsprechenden Anzahl von Aufnahmeöffnungen, insbesondere Nuten für die Wuchtringe, jeder Wuchtring mit einer geeigneten Fixier- oder Klemmvorrichtung ausgebildet sein muß. Für den Fall, daß zwei Wuchtringe in einer gemeinsamen Nut im Werkzeughalter oder im Werkzeugkörper aufgenommen werden, ist es bei entsprechender Anordnung der Wuchtringe ausreichend, wenn lediglich einer der beiden Wuchtringe mit einer derartigen Fixier- bzw. Klemmvorrichtung ausgebildet ist.

Für eine besonders einfache und wirksame Festlegung der Wuchtringe ist gemäß einer bevorzugten Ausführungsform die Ausbildung so getroffen, wie dies in Anspruch 5 unter Schutz gestellt ist. Derartige in radialer Richtung verstellbare Klemmelemente ergeben eine Verspreizung des zugehörigen Wuchtringes in der kreisförmigen Nut in der eingestellten Drehstellung gegenüber dem Körper des Werkzeughalters oder des Werkzeuges selbst, wobei die radiale Verstellung der Klemmelemente durch ein entsprechend verstellbares Klemmstück erzielbar ist. Gemäß einer besonders bevorzugten Ausführungsform ist die Ausbildung der Klemmvorrichtung so getroffen, wie dies in Anspruch 6 gekennzeichnet ist. Derartige Spreizkugeln können in einfachen Bohrungen des entsprechenden Wuchtringes aufgenommen werden, wobei durch Einschrauben einer mit einer Abschrägung versehenen Schraube, beispielsweise einer Senkkopfschraube, in Richtung normal auf die Ebene des Wuchtringes sich eine entsprechende radiale Verschiebung des von den Spreizkugeln gebildeten Klemmelementes ergibt. Somit erfolgt zum einen eine Festlegung des mit der Klemmvorrichtung ausgebildeten Wuchtringes an einer Seitenwand der Nut zur Aufnahme des Wuchtringes, während das andere Klemmelement gegen den Außenumfang des benachbarten Wuchtringes wirksam wird. Derart wird gleichzeitig auch der andere Wuchtring, welcher über keine eigene Klemmvorrichtung verfügt, gegenüber dem Werkzeughalter bzw. dem Werkzeugkörper fixiert.

Für eine gleichmäßige Einleitung der Kräfte zur Fixierung des Wuchtringes ist bevorzugt die Ausbildung zu getroffen, wie dies in Anspruch 7 unter Schutz gestellt ist.

Um eine entsprechend einfache Wiederholbarkeit der relativen Positionierung der Wuchtringe zueinander sowie relativ zum Werkzeughalter bzw. zum Werkzeugkörper zu ermöglichen, sind Skalierungen vorgesehen, wie dies in Anspruch 8 gekennzeichnet ist.

Eine besonders platzsparende Ausbildung eines erfindungsgemäßen Rundlaufwerkzeuges im Sinne einer möglichst geringen Gesamtlänge ergibt sich bei Verwendung eines Fräsers, wie er in Anspruch 9 näher gekennzeichnet ist. Da der Fräserkörper zur Aufnahme und Festlegung der Frässchneiden in jedem Fall auch über eine entsprechende axiale Erstreckung verfügen muß und somit einen entsprechenden Materialquerschnitt aufweist, kann erfindungsgemäß an der von den Frässcheiben abgewandten Stirnfläche in einfacher Weise wenigstens eine Nut zur Aufnahme der Wuchtringe ausgebildet werden, so daß sich erfindungsgemäß insgesamt keinerlei Vergrößerung der Baulänge des Werkzeuges gegenüber einem ohne Wuchtringe ausgebildeten, entsprechenden Werkzeug ergibt.

Die Erfindung wird nachfolgend anhand eines in der beigeschlossenen Zeichnung näher dargestellten Ausführungsbeispieles näher erläutert, in welcher das erfindungsgemäße Rundlaufwerkzeug von einem Fräser gebildet wird. Es zeigen:
- Fig. 1: eine Seitenansicht - teilweise im Schnitt - eines erfindungsgemäßen Rundlaufwerkzeuges mit eingelegten Wuchtringen,
- Fig. 2: eine Draufsicht auf die Rückseite des Rundlaufwerkzeuges von Fig. 1 in Richtung des Pfeiles II, und
- Fig. 3: eine vergrößerte Ausschnittsdarstellung des Bereiches III in Fig. 1.

Der insgesamt mit 1 bezeichnete Fräserkörper, welcher das Rundlaufwerkzeug darstellt, weist an seiner Rückseite einen Steilkegel 2 zur Fixierung an der Spindel einer Werkzeugmaschine und an seiner Vorderseite einen flanschartigen Sohneidenträger 3 auf. Beim dargestellten Ausführungsbeispiel handelt es sich um einen Planfräser mit an der vorderen Stirnfläche des flanschartigen Schneidenträgers 3 angeordneten Schneidkörpern 4.

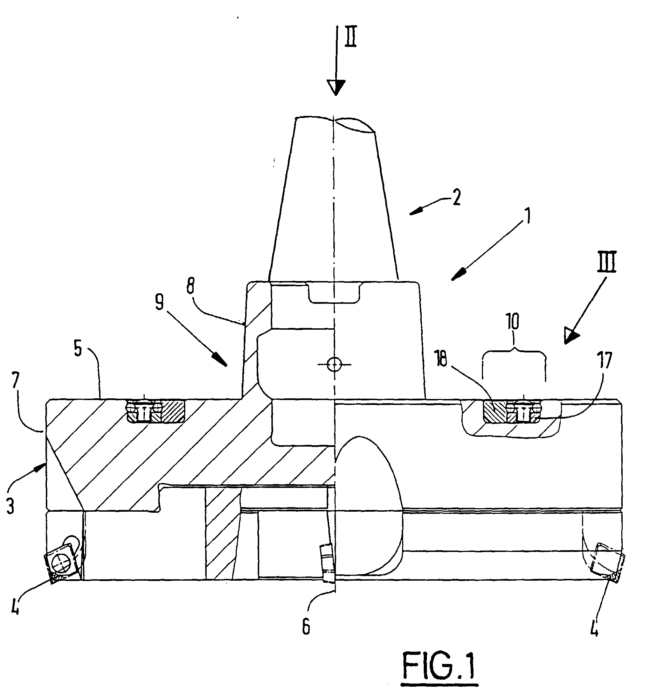

Wie aus Fig. 1 deutlich ersichtlich, ist die von den Schneidkörpern 4 abgewandte Stirnfläche 5 des Schneidenträgers 3 in einer zur Rotationsachse 6 des Fräsers rechtwinklig ausgerichtete Ebene angeordnet. Wesentlich ist, daß ein stufenartiger Zwischenbereich zwischen dem Außenumfang 7 des flanschartigen Schneidenträgers 3 und dem Schaftumfang 8 eines rückseitig an die rückwärtige Stirnfläche 5 anschließenden Fräserbereiches vorhanden ist. In diesem Stufenbereich 9 ist eine zur Rückseite, d.h. zu der von den Schneiden 4 abgewandten Seite, hin offene und zur Rotationsachse 6 konzentrische Ringnut 10 in der Stirnfläche 5 ausgebildet.

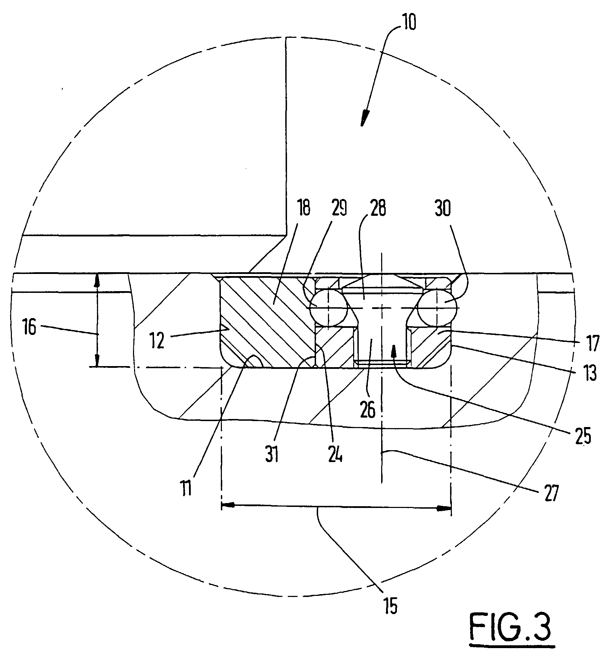

Die Querschnittsform dieser Ringnut 10 ist besonders deutlich aus Fig. 3 zu erkennen. Sie weist einen Nutboden 11, eine Innenseitenwand 12 und eine Außenseitenwand 13 auf. Die Ringnut 10 hat einen im wesentlichen rechteckigen Querschnitt, wobei die in Radialrichtung 14 des Rundlaufwerkzeuges 1 wirksame Breite 15 der Ringnut 10 etwa doppelt so groß wie die Nuttiefe 16 ist.

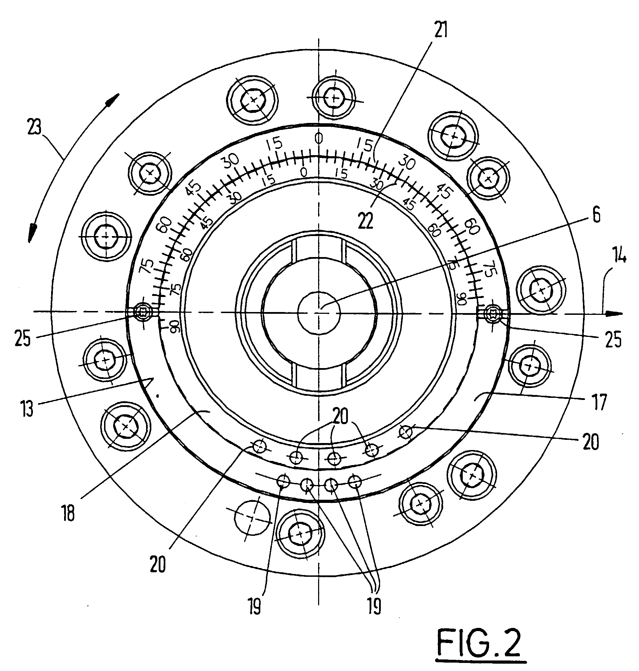

Innerhalb der Ringnut 10 sind konzentrisch zueinander bzw. zur Rotationsachse 6 ein äußerer Wuchtring 17 und ein innerer Wuchtring 18 angeordnet. Die beiden Wuchtringe 17, 18 sind in einem Umfangsbereich - in Fig. 2 oben dargestellt - mit ihre Masse reduzierenden Bohrungen 19 bzw. 20 versehen. Die Bohrungen 19, 20 sind auf einem zur Rotationsachse 6 konzentrischen Kreisbogen in gleichmäßigen Abständen zueinander positioniert und ihre Bohrungsachsen verlaufen im wesentlichen parallel zur Rotationsachse 6 des Rundlaufwerkzeuges 1.

Die beiden Wuchtringe 17, 18 tragen auf ihrer außenliegenden, zur Rückseite des Rundlaufwerkzeuges 1 weisenden Oberfläche im Grenzbereich zueinander jeweils eine Skaleneinteilung 21 bzw. 22. Die beiden Skaleneinteilungen 21, 22 korrespondieren miteinander und ermöglichen so eine besonders genaue Positionierung und auch Wiederholbarkeit bzw. Dokumentierung der jeweiligen Drehstellungen. Falls notwendig, kann die Stirnfläche 5 im Bereich der Nut 10 ebenfalls eine Skalierung aufweisen.

Die beiden Wuchtringe 17, 18 sind formschlüssig bzw. gleitschlüssig von den Seitenwänden 12, 13 der Ringnut 10 umschlossen. Zur Fixierung der Wuchtringe 17 und 18 ist bei der dargestellten Ausführungsform eine Fixier- bzw. Klemmvorrichtung an einem Wuchtring ausreichend, da die Wuchtringe 17 und 18 aneinander anliegend in einer gemeinsamen Ausnehmung bzw. Ringut 10 angordnet sind. Die mit dem äußeren Wuchtring verbundene Fixiervorrichtung umfaßt eine Senkkopfschraube 25, die mit ihrem Schaft 26 in den äußeren Wuchtring 17 einschraubbar ist. Die Schraubenachse 27 verläuft parallel zur Rotationsachse 6 des Körpers. Beim Einschrauben spreizt der Senkkopf 28 der Schraube 25 mit seiner kegelmantelförmigen Umfangsfläche die von Spreizkugeln 29, 30 gebildeten Klemmelemente in Radialrichtung 14 des Rundlaufwerkzeuges 1 auseinander. Dabei wird die innere Spreizkugel 29 gegen den inneren Wuchtring 18 und die äußere Spreizkugel 30 gegen die äußere Seitenwand 13 der Nut gepreßt. Diese Pressungen bewirken nicht nur eine sichere Umfangsfixierung des äußeren Wuchtringes 17, sondern damit auch eine solche Fixierung des inneren Wuchtringes 18 innerhalb der Ringnut 10 bzw. gegenüber dem Fräserkörper 1.

Zur Verstellung der beiden Wuchtringe 17, 18 in Umfangsrichtung 23 braucht nur die Fixierschraube 25 gelöst zu werden. Aus Fig. 2 ist erkennbar, daß zwei Fixierschrauben bzw. Fixiereinrichtungen 25 in einander diametral gegenüberliegenden Bereichen des äußeren Wuchtringes 17 angeordnet sind, um eine einfache und symmetrische Festlegung der Wuchtringe 17 und 18 sicherzustellen.

Durch die dargestellte Ausbildung mit nur einer Ringnut 10 und zwei darin angeordneten, zueinander konzentrischen Wuchtringen 17, 18 muß, wie bereits oben erwähnt, nur einer der beiden Wuchtringe 17 mit einer Klemm- bzw. Fixiereinrichtung versehen werden, während bei getrennt angeordneten Wuchtringen beide nebeneinander angeordneten Wuchtringe einer solchen Fixiereinrichtung bedürfen.

Der mit der den Ringquerschnitt schwächenden Fixiereinrichtung versehene äußere Wuchtring 17 gemäß der dargestellten Ausführungsform ist besonders wirksam unmittelbar an der äußeren Seitenwand 13 der Ringnut 10 über seinen gesamten Umfang gegen auf ihn einwirkende Fliehkräfte abgeztützt. Der innere Wuchtring 18 erfährt eine ebensolche wirksame Abstützung in radialer Richtung über seine Anlage an der Innenringwand 31 des äußeren Wuchtringes 17.

Anstelle der direkten Anordnung der wenigstens einen Ringnut 10 zur Aufnahme der Wuchtringe 17 und 18 im Körper des Werkzeuges 1 selbst kann bei einer alternativen Ausführungsform, beispielsweise im Zusammenhang mit einem Hochgeschwindigkeitsbohrer, bei welchem an dem vom Bohrer gebildeten Werkzeug naturgemäß eine Festlegung von Wuchtringen nicht möglich ist, der Werkzeughalter selbst in einem abgestuften, flachen Bereich mit wenigstens einer Nut 10 zur Aufnahme von konzentrischen, ineinander liegenden Wuchtringen 17 und 18 vorgesehen sein.

### Bezugszeichenliste

- 1: Fräserkörper
- 2: Steilkegel
- 3: Schneidenträger
- 4: Schneide
- 5: Rückenstirnfläche
- 6: Rotationsachse
- 7: Außenumfang des Fräserkörpers
- 8: Schaftumfang des Fräserkörpers
- 9: Stufenbereich
- 10: Ringnut
- 11: Nutboden
- 12: Innenseitenwand der Nut
- 13: Außenseitenwand der Nut
- 14: Radialrichtung
- 15: Ringnutbreite
- 16: Ringnuttiefe
- 17: äußerer Wuchtring
- 18: innerer Wuchtring
- 19: Bohrung
- 20: Bohrung
- 21: Skaleneinteilung
- 22: Skaleneinteilung
- 23: Umfangsrichtung
- 24: Ringaußenwand
- 25: Senkkopfschraube
- 26: Schaft der Schraube
- 27: Schraubenachse
- 28: Senkkopf
- 29: Spreizkugel
- 30: Spreizkugel
- 31: Innenringwand des äußeren Wuchtringes

## Patentansprüche

1. Rundlaufwerkzeug, insbesondere Hochgeschwindigkeitsfräser oder -bohrer, wobei am Werkzeughalter oder Werkzeugkörper (1) wenigstens zwei Wuchtringe (17, 18) mit über ihrem Umfang unterschiedlicher Masse gelagert sind,
dadurch gekennzeichnet,
daß zwei konzentrische, in ihrer Position relativ zueinander und relativ zur Rotationsachse (6) des Werkzeuges (1) verstellbare Wuchtringe (17, 18) im Werkzeughalter oder Werkzeugkörper (1) in einer gemeinsamen Ebene normal auf die Rotationsachse (6) des Werkzeuges (1) lösbar aufgenommen sind und in radiaier Richtung (14) durch den Werkzeughalter oder Werkzeugkörper (1) abgestützt sind.

2. Rundlaufwerkzeug nach Anspruch 1,
dadurch gekennzeichnet,
daß in einer auf die Rotationsachse (6) des Werkzeuges (1) im wesentlichen normal verlaufenden Stirnfläche (5, 9) des Werkrzeughalters oder Werkzeugkörpers (1) wenigstens eine zur Rotationsachse (6) des Werkzeuges (1) konzentrische, kreisförmige Nut (10) zur Aufnahme der zwei Wuchtringe (17, 18) ausgebildet ist.

3. Rundlaufwerkzeug nach Anspruch 2,
dadurch gekennzeichnet,
daß die Breite (15) der die Wuchtringe (17, 18) aufnehmenden Nut (10) in radialer Richtung (14) des Werkzeugkörpers oder Werkzeughalters (1) im wesentlichen das Doppelte der Tiefe (16) der Nut (10) beträgt.

4. Rundlaufwerkzeug nach Anspruch 1, 2 oder 3,
dadurch gekennzeichnet,
daß wenigstens ein Wuchtring (17) mit einer Klemmvorrichtung (25 - 30) ausgebildet ist.

5. Rundlaufwerkzeug nach Anspruch 4,
dadurch gekennzeichnet,
daß in dem mit einer Klemmvorrichtung ausgebildeten Wuchtring (17) in radialer Richtung (14) verstellbare Klemmelemente (29, 30) aufgenommen sind, welche über ein in Richtung (27) normal auf die Ebene des Wuchtringes (17) verstellbares Klemmstück (25) in radialer Richtung (14) beaufschlagbar sind.

6. Rundlaufwerkzeug nach Anspruch 5,
dadurch gekennzeichnet,
daß die Klemmelemente von Spreizkugeln (29, 30) gebildet sind und daß das Klemmstück von einer mit einer Abschrägung (28) versehenen Schraube (25) gebildet ist.

7. Rundlaufwerkzeug nach Anspruch 4, 5 oder 6,
dadurch gekennzeichnet,
daß relativ zur Rotationsachse (6) des Werkzeuges (1) einander diametral gegenüberliegend zwei Klemmvorrichtungen (25 - 30) an dem Wuchtring (17) vorgesehen sind.

8. Rundlaufwerkzeug nach einem der Ansprüche 1 bis 7,
dadurch gekennzeichnet,
daß die Wuchtringe (17, 18) an ihrer nach außen weisenden Stirnfläche und gegebenenfalls die die Nut (10) aufweisende Stirnfläche (5, 9) des Werkzeugkörpers (1) oder Werkzeughalters eine Skalierung (21, 22) aufweisen.

9. Rundlaufwerkzeug nach einem der Ansprüche 1 bis 8,
dadurch gekennzeichnet,
daß das Werkzeug von einem Fräser (1) gebildet ist und daß die wenigstens eine Nut (10) zur Aufnahme der Wuchtringe (17, 18) auf der von den Frässchneiden (4) abgewandten Stirnfläche (5) des Fräserkörpers (1) ausgebildet ist.

## Claims

1. Rotary tool, in particular a high-speed milling cutter or drill, at least two balancing rings (17, 18) which have a mass varying over their circumference being mounted on the tool holder or tool body (1), characterized in that two concentric balancing rings (17, 18), adjustable in their position relative to one another and relative to the rotational axis (6) of the tool (1), are detachably accommodated in the tool holder or tool body (1) in a common plane normal to the rotational axis (6) of the tool (1) and are supported in the radial direction (14) by the tool holder or tool body (1).

2. Rotary tool according to Claim 1, characterized in that at least one circular groove (10) concentric to the rotational axis (6) of the tool (1) and intended for accommodating the two balancing rings (17, 18) is formed in an end face (5, 9) or the tool holder or tool body (1), said end face (5, 9) running essentially normally to the rotational axis (6) of the tool (1).

3. Rotary tool according to Claim 2, characterized in that the width (15) of the groove (10), accommodating the balancing rings (17, 18), in the radial direction (14) of the tool body or tool holder (1) is essentially twice the depth (16) of the groove (10).

4. Rotary tool according to Claim 1, 2 or 3, characterized in that at least one balancing ring (17) is formed with a clamping device (25 - 30).

5. Rotary tool according to Claim 4, characterized in that clamping elements (29, 30) adjustable in the radial direction (14) are accommodated in the balancing ring (17) formed with a clamping device and can be acted upon in the radial direction (14) via a clamping piece (25) adjustable in the direction (27) normal to the plane of the balancing ring (14).

6. Rotary tool according to Claim 5, characterized in that the clamping elements are formed by spreading balls (29, 30), and in that the clamping piece is formed by a screw (25) provided with a bevel (28).

7. Rotary tool according to Claim 4, 5 or 6, characterized in that two clamping elements (25 30) are provided on the balancing ring (17) diametrically opposite one another relative to the rotational axis (6) of the tool (1).

8. Rotary tool according to one of Claims 1 to 7, characterized in that the balancing rings (17, 18), on their end face pointing outwards, and if need be that end face (5, 9) of the tool body (1) or tool holder which has the groove (10), have a scale (21, 22).

9. Rotary tool according to one of Claims 1 to 8, characterized in that the tool is formed as a milling cutter (1), and in that the at least one groove (10) for accommodating the balancing rings (17, 18) is formed on that end face (5) of the cutter body (1) which is remote from the cutting edges (4).

## Revendications

1. Outil rotatif, en particulier fraise ou foret à haute vitesse, dans lequel au moins deux bagues d'équilibrage (17, 18) de masses différentes sur leurs périphéries sont montées sur le porte-outil ou bien sur le corps d'outil (1), caractérisé en ce que deux bagues d'équilibrage (17, 19) capables d'être déplacées l'une par rapport à l'autre quant à leurs positions et par rapport à l'axe de rotation (6) de l'outil (1), sont reçues de façon détachable dans le porte-outil ou bien dans le corps d'outil (1) dans un plan commun perpendiculaire à l'axe de rotation (6) de l'outil (1), et sont supportées en direction radiale (14) par le porte-outil ou bien par le corps d'outil (1).

2. Outil rotatif selon la revendication 1, caractérisé en ce que dans une surface frontale (5, 9) du porte-outil ou bien du corps d'outil (1), qui s'étend sensiblement perpendiculairement à l'axe de rotation (6) de l'outil (1), est ménagée au moins une gorge circulaire (10) concentrique à l'axe de rotation (6) de l'outil (1), afin de recevoir les deux bagues d'équilibrage (17, 18).

3. Outil rotatif selon la revendication 2, caractérisé en ce que la largeur de la gorge (10) qui reçoit les bagues d'équilibrage (17, 18), en direction radiale (14) du porte-outil ou bien du corps d'outil (1), s'élève sensiblement au double de la profondeur (16) de la gorge (10).

4. Outil rotatif selon l'une des revendications 1, 2 et 3, caractérisé en ce qu'au moins une bague d'équilibrage (17) est réalisée avec un dispositif de serrage (25 - 30).

5. Outil rotatif selon la revendication 4, caractérisé en ce que dans la bague d'équilibrage (17) réalisée avec un dispositif de serrage, sont reçus des éléments de serrage (29, 30) capables d'être déplacés en direction radiale (14), et qui peuvent être sollicités en direction radiale au moyen d'une pièce de serrage (25) susceptible d'être déplacée dans une direction (27) perpendiculaire au plan de la bague de serrage (17).

6. Outil rotatif selon la revendication 5, caractérisé en ce que les éléments de serrage sont formés par des billes d'écartement (29, 30) et en ce que la pièce de serrage est formée par une vis (25) pourvue d'une partie en pente (28).

7. Outil rotatif selon l'une des revendications 4, 5 et 6, caractérisé en ce qu'il est prévu sur la bague d'équilibrage (17) deux dispositifs de serrage (25 - 30) diamétralement opposés l'un à l'autre par rapport à l'axe de rotation (6) de l'outil (1).

8. Outil rotatif selon l'une des revendications 1 à 7, caractérisé en ce que les bagues d'équilibrage (17, 18) présentent une échelle (21, 22) sur sa surface frontale tournée vers l'extérieur, et le cas échéant sur les surfaces frontales (5, 9) du porte-outil ou bien du corps d'outil (1) qui comportent la gorge (10).

9. Outil rotatif selon l'une des revendications 1 à 8, caractérisé en ce que l'outil est formé par une fraise (1), et en ce que ladite au moins une gorge (10) pour recevoir les bagues d'équilibrage (17, 18) est réalisée sur la face frontale (5) du corps de fraise (1) détournée des tranchants (4) de la fraise.
